Europäisches Patentamt

European Patent Office

Office européen des brevets

(19)

(11) Numéro de publication: **0 182 418**
**A1**

## (12) DEMANDE DE BREVET EUROPEEN

(21) Numéro de dépôt: 85201797.9

(22) Date de dépôt: 06.11.85

(51) Int. Cl.4: **G01S 7/40**

(30) Priorité: 13.11.84 FR 8417271

(43) Date de publication de la demande:
28.05.86 Bulletin 86/22

(84) Etats contractants désignés:
DE FR GB

(71) Demandeur: TELECOMMUNICATIONS RADIOELEC-
TRIQUES ET TELEPHONIQUES T.R.T.
88, rue Brillat Savarin
F-75013 Paris(FR)
Demandeur: N.V. Philips' Gloeilampenfabrieken
Groenewoudseweg 1
NL-5621 BA Eindhoven(NL)

(72) Inventeur: Riffiod, Michel Marcel Robert
SOCIETE CIVILE S.P.I.D. 209 rue de l'Université
F-75007 Paris(FR)

(74) Mandataire: Pyronnet, Jacques et al
Société Civile S.P.I.D. 209 rue de l'Université
F-75007 Paris(FR)

(54) **Simulateur de retards pour appareil de mesure de distance à onde continue modulée en fréquence.**

(57) L'appareil FM-CW (1) à tester engendre un signal de battement Fb à fréquence fb entre ondes émise et reçue. Le simulateur est destiné à être connecté à cet appareil (2-4, 3-5). Selon l'invention, le simulateur comporte une chaîne de traitement de signal, constituée par un premier interrupteur HF (6) un circulateur (7) et un deuxième interrupteur HF (8), une ligne à retard (11) travaillant en réflexion procurant le retard $\tau$ et reliée à une entrée-sortie du circulateur, et des moyens de commande des interrupteurs (26, 28, 29, 33) qui sont fermés à une fréquence $f_r(f_r > 2b)$, le premier pendant $\delta$ ($\delta \ll 1/f_r$) le deuxième pendant $\delta'$ ($\delta' \sim \delta$). Le déphasage entre $\delta$ et $\delta'$ ($\tau'$) est tel que les durées $\delta$ et $\delta'$ soient disjointes et qu'au moins un écho d'ordre p dans la ligne à retard satisfasse l'équation :

$$p.\tau = \frac{k}{f_r} + \tau',$$ k étant un nombre entier petit.

Application au test de précision d'un radioaltimètre.

FIG.4

## SIMULATEUR DE RETARDS POUR APPAREIL DE MESURE DE DISTANCE A ONDE CONTINUE MODULEE EN FREQUENCE.

L'invention concerne un simulateur de retards pour appareil de mesure de distance, notamment d'altitude, ou radar, à onde continue modulée linéairement en fréquence (FM-CW), ledit appareil effectuant, en fonctionnement réel, une comparaison de fréquence entre l'onde émise et l'onde reçue après réflexion sur une cible ou réémission par un répondeur de façon à engendrer un signal de battement Fb à fréquence fb, ledit simulateur étant destiné à être connecté audit appareil pour tester son fonctionnement.

L'invention s'applique aux essais d'appareils de mesure de distance et plus particulièrement aux radioaltimètres. A titre d'exemple préféré on s'intéresse dans la suite du texte, à des distances qui peuvent varier de 0 à 16 km (0 à 50000 pieds) et plus et que doivent mesurer des radioaltimètres ou des radars dits FM-CW fonctionnant dans une bande de fréquence couvrant quelques centaines de MHz

$$D_s = \frac{c \cdot \tau_s}{2} \qquad (1)$$

c étant la vitesse d'une onde électromagnétique dans l'air. La distance $D_s$ est celle que doit indiquer l'appareil FM-CW avec une erreur faible si ce dernier fonctionne correctement, lorsqu'on lui applique la ligne à retard de retard $\tau_s$. En effet, lorsqu'une ligne à retard est connectée entre les antennes d'un radioaltimètre, elle retarde l'onde émise par ce dernier d'un temps $\tau_s$ et, pour le radioaltimètre, tout se passe comme si l'onde avait été émise dans l'air, réfléchie par un obstacle situé à une distance $D_s$ du radioaltimètre et captée par l'antenne réceptrice après retour de l'onde sur la même distance $D_s$ (dans cette comparaison, on ne s'intéresse, en ce qui concerne l'onde, qu'aux fonctions de fréquence en fonction du temps, les problèmes d'atténuation du signal entre antennes émettrice et réceptrice étant supposés résolus). Cette méthode de test d'un radioaltimètre est précise mais, à cause du prix et du volume des lignes à retard nécessaires, il n'est pas possible d'en rassembler un nombre suffisant pour tester la précision à beaucoup d'altitudes (de distances). On ne teste donc en pratique cette précision que pour quelques points, toujours les mêmes, et on risque de ne pas détecter des défauts qui n'apparaissent que dans des zones d'altitude limitées. D'autre part, pour les raisons de prix et d'encombrement précités les tests ne sont effectués , en pratique, qu'en laboratoire alors qu'il serait souhaitable de pouvoir utiliser un système de test aéroporté.

Un but de l'invention est de réaliser un simulateur de retards pour appareil de mesure de distance ou radar FM-CW de faible prix et de faible encombrement qui puisse être aéroporté.

Un autre but de l'invention est de réaliser un simulateur de retards qui puisse tester un appareil de mesure de distance ou un radar FM-CW en un nombre de distances simulées de préférence régulièrement espacées pouvant dépasser 10 et selon une plage de distances s'étendant entre 0 et plus de 16000 mètres.

et centrée de préférence autour de quelques GHz, par exemple la bande 4,2 à 4,4 GHz ou centrée autour d'une fréquence plus basse, par exemple de l'ordre de 1 GHz. Un radioaltimètre de ce type, utilisant d'autres fréquences de fonctionnement, est décrit dans le brevet français n° 1557670. Plus précisément, on souhaite pouvoir tester le fonctionnement d'un radioaltimètre à haute altitude ou celui d'un radar FM-CW à des distances atteignant environ 17000 mètres.

Avant la mise en service d'un radioaltimètre, il est nécessaire de le tester et, en particulier, de vérifier sa précision. Dans la technique connue on utilise à cette fin des lignes à retard dont on connaît avec précision le temps de retard $\tau_s$. Chaque ligne à retard est représentative d'une distance simulée $D_s$ selon la formule :

Ces buts sont atteints et les inconvénients de l'art antérieur sont atténués ou supprimés grâce au fait que le simulateur de retards défini en préambule est remarquable en ce qu'il comporte entre une partie émission et une partie réception d'une part une chaîne de traitement de signal constituée au moins par un premier interrupteur pour hyperfréquences un circulateur et un deuxième interrupteur pour hyperfréquences, d'autre part une ligne à retard travaillant en réflexion caractérisée par un temps d'aller-retour de l'onde à une fréquence donnée égale à $\tau$ et reliée par une entrée-sortie à une entrée-sortie du circulateur, et en troisième lieu des moyens de commande desdits interrupteurs tels que ces derniers soient fermés à une fréquence fr au moins égale à 2fb, le premier pendant un intervalle de temps $\delta$ nettement inférieur à 1/fr, le deuxième pendant un intervalle de temps $\delta'$ du même ordre que $\delta$, le déphasage de fonctionnement prédéterminé entre les deux interrupteurs pour hyperfréquences qui correspond à un intervalle de temps $\tau'$ réglable entre le début des intervalles de temps $\delta$ et $\delta'$ étant tel que les intervalles de temps $\delta$ et $\delta'$ soient disjoints et qu'au moins un écho d'ordre p de la ligne à retard satisfasse l'équation : $p\tau \approx \frac{k}{fr} + \tau'$, k étant un nombre entier petit.

Une idée qui est au départ de l'invention est d'utiliser une ligne à retard travaillant en réflexion et multi-échos. De telles lignes, connues, sont utilisées par exemple par les radaristes. Un radar peut en effet détecter plusieurs cibles simultanément ce qui permet, lorsqu'une ligne à retard multi-échos est interposée dans le trajet émission-réception d'un radar, de tester ce dernier pour plusieurs distances simulées $d_i$ selon la formule :

$$d_i = \frac{c \cdot i \cdot \tau}{2} \qquad (2)$$

c étant la vitesse de la lumière

i étant un nombre entier représentatif du rang de l'écho considéré.

La ligne à retard multi-échos est conçue pour que l'atténuation apportée à l'onde après plusieurs allers et retours dans la ligne ne soit pas trop grande de façon que le signal ne soit pas noyé dans le bruit. Il est par exemple possible d'obtenir des lignes à retard de ce type, à ondes de volume, donnant jusqu'à l'écho d'ordre 12 avec une atténuation inférieure à 130 dB. A partir de cet art antérieur connu, un problème technique majeur se pose cependant pour adapter la ligne à retard précitée à un radioaltimètre dont on veut tester la précision en distance. Un radioaltimètre est conçu en effet pour détecter la cible la plus proche, ceci pour des raisons évidentes de sécurité, ladite cible étant ordinairement le sol ou un répondeur radioélectrique. Le problème est donc de parvenir à sélectionner tel ou tel écho d'ordre i souhaité représentatif de la distance $d_i$ à tester selon la formule (2) ci-dessus. Pour obtenir une sélection d'un écho particulier il est par exemple envisageable d'effectuer une sélection en fréquence. Etant donné le découpage en fréquence en dents de scie adopté pour l'onde émise par l'appareil FM-CW on peut concevoir d'utiliser, en aval de la ligne à retard multi-échos, un filtre passe bande dont la bande passante est assez fine et réglable. Cependant des filtres accordables en hyperfréquence sont difficiles à réaliser et une telle façon d'opérer demanderait une grande précision et une grande fiabilité de l'appareillage. L'idée de base de l'invention est d'effectuer un découpage de l'onde émise par l'appareil FM-CW avant d'émettre celle-ci dans la ligne à retard. Un second découpage après retard et décalé dans le temps par rapport à l'émission permet de sélectionner l'écho désiré si la fréquence de découpage est judicieusement choisie. Pour choisir la fréquence de découpage et le rapport cyclique du découpage, il faut tenir compte des deux contraintes suivantes :

- la fréquence de découpage doit être supérieure à deux fois la fréquence de battement fb du radioaltimètre, ceci pour respecter le principe d'échantillonnage ;

- le rapport cyclique et la fréquence de découpage doivent être choisis de façon telle que l'écho désiré soit séparable dans le temps par rapport aux autres échos.

A cet égard, un mode de réalisation avantageux du simulateur de retard selon l'invention permettant la simulation non simultanée de plusieurs retards selon l'invention est remarquable en ce que pour des fréquences de fonctionnement de ladite ligne à retard de l'ordre de 1 GHz, cette dernière émet un nombre d'échos identifiables au plus égal à n, ce qui permet de simuler au plus n retards différents séparés par $\tau$ ou un multiple de $\tau$, et que les relations suivantes sont vérifiées :

$$f_r = \frac{k \pm \dfrac{u}{n+1}}{\tau}$$

$$\delta \leqslant \frac{\tau}{k(n+1) \pm u}$$

$$\tau' = \frac{\tau \cdot i}{k(n+1) + u}$$

relations dans lesquelles :

k est un nombre entier tel que : $\dfrac{k}{\tau} > 2\,fb$

u est un nombre entier qui divise n

i est un nombre entier qui peut prendre les valeurs 1, 2, 3,..., n pour un couple de valeurs k et u donné.

Un autre problème technique peut se poser pour adapter une ligne à retard multi-échos travaillant en réflexion au test de la précision en distance d'un radioaltimètre, dans le cas le plus fréquent où ce dernier fonctionne à une fréquence supérieure à 1 GHz par exemple à une fréquence comprise entre 4,2 GHz et 4,4 GHz. La ligne à retard préférée pour la mise en oeuvre de l'invention est en corindon, ce matériau présentant une atténuation qui croît sensiblement avec la fréquence et il ne serait pas possible d'obtenir les échos souhaités à une fréquence de l'ordre de 4 GHz. Par contre, étant donné que la bande passante d'une telle ligne à retard au voisinage de 1 GHz reste suffisamment importante, on peut retarder l'onde émise autour de 4 GHz moyennant un double changement de fréquence qui reste compatible avec l'idée de base de l'invention indiquée ci-dessus.

Dans ces conditions, un simulateur de retard pour appareil de mesure de distance fonctionnant à une fréquence fe de plusieurs GHz compatible avec les précédents est remarquable en ce que ladite ligne à retard fonctionne à la fréquence intermédiaire fi de l'ordre de 1 GHz et qu'à cet effet un premier et un deuxième mélangeur pour hyperfréquences sont insérés dans ladite chaîne de traitement de signal entre le premier interrupteur et le circulateur et entre le circulateur et le deuxième interrupteur respectivement, le premier mélangeur recevant soustractivement un signal Fos en provenance d'un oscillateur à une fréquence fos telle que : fe - fos = fi et le deuxième mélangeur recevant additivement le signal Fos en provenance dudit oscillateur, de façon à restituer à sa sortie un signal de fréquence : fi + fos = fe.

La description qui suit en regard des dessins annexés, le tout donné à titre d'exemple, fera bien comprendre comment l'invention peut être réalisée.

La figure 1 est un schéma synoptique simplifié d'un premier mode de réalisation de l'invention.

La figure 2 est un diagramme de temps de trois signaux permettant d'expliciter le fonctionnement de base du simulateur selon l'invention.

La figure 3 est un diagramme de temps analogue à celui de la figure 2 montrant un découpage avantageux de l'onde pour les modes de réalisation des figures 1 et 4.

La figure 4 est un schéma synoptique d'un deuxième mode de réalisation de l'invention.

La figure 5 est un diagramme de temps de différents signaux présents sur des conducteurs du schéma de la figure 4.

La figure 6 est un schéma synoptique détaillé de la partie hyperfréquence pour le mode de réalisation de la figure 4.

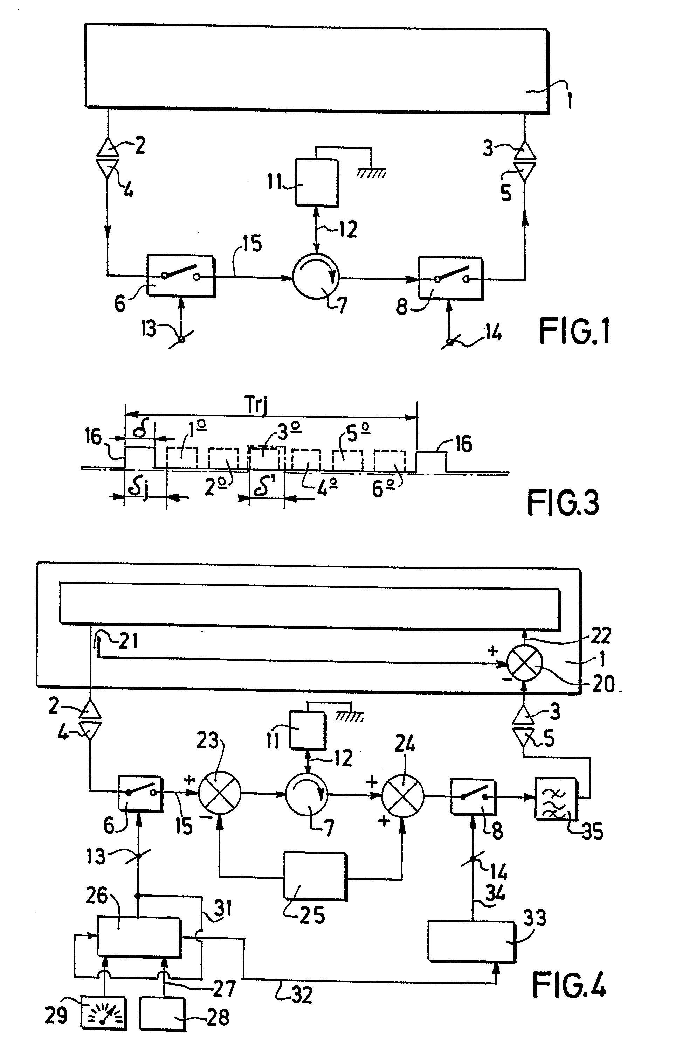

Sur la figure 1 est représenté un appareil 1 de mesure de distance, par exemple d'altitude, ou un radar FM-CW. Cet appareil émet, par des moyens d'émission 2 constitués par une antenne émettrice et/ou une prise coaxiale, un signal F dont la fréquence f peut être représentée par des rampes positives éventuellement séparées par des paliers de façon à constituer une dent de scie récurrente asymétrique. De préférence, l'excursion de fréquence de la dent de scie, $\Delta F$, est maintenue constante. Pour fixer les idées on supposera dans la suite du texte que la valeur de $\Delta F$ est de 200 MHz et que la fréquence f est supérieure à 1 GHz. Par exemple, la fréquence f varie entre 1,2 et 1,4 GHz ou entre 4,2 et 4,4 GHz. En fonctionnement réel, l'onde émise par l'antenne 2 parcourt une distance D, est réfléchie par un obstacle ou est renvoyée après amplification par un répondeur, et captée sous forme d'un signal F' de fréquence f' par l'antenne réceptrice 3 du radioaltimètre, avec un décalage dans le temps égal à $\tau_1$ par rapport à l'onde émise F. Le temps $\tau_1$ est égal à :

$$\tau_1 = \frac{2D}{c} \qquad (3)$$

ce qui entraîne :

$$D = \frac{c.\tau_1}{2} \qquad (4)$$

Dans l'appareil FM-CW, la fréquence fb, qui représente le battement soustractif entre onde émise F et reçue F' est aussi maintenue constante et satisfait à la relation :

$$\frac{fb}{\tau_1} = \frac{\Delta F}{T} \qquad (5)$$

T étant la durée de chaque rampe de fréquence. Des relations (4) et (5) on déduit :

$$D = \frac{c.T}{2\Delta F} \, fb \qquad (6)$$

De la formule (6) il ressort que, les paramètres fb et $\Delta F$ étant supposés connus et par exemple maintenus constants, la distance D est proportionnelle à T. Autrement dit, le temps T constitue une mesure de D.

Selon l'invention, dans le but de tester en distance l'appareil FM-CW, on lui adjoint le simulateur représenté à la partie basse de la figure 1. Ce simulateur comporte entre une partie émission, par exemple une antenne 4 et une partie réception, par exemple une antenne 5, une chaîne de traitement de signal constituée par la succession en cascade d'un premier interrupteur pour hyperfréquences 6, un circulateur 7 et un deuxième interrupteur pour hyperfréquences 8. D'autre part, une ligne à retard travaillant en réflexion est reliée au circulateur 7 par un conducteur 12 disposé entre une entrée-sortie de la ligne à retard 11 et une entrée-sortie du circulateur 7. Des moyens de commande non représentés qui agissent sur des bornes de commande 13 et 14 respectivement permettent l'ouverture et la fermeture des interrupteurs 6 et 8. Le signal qui résulte du découpage effectué par l'interrupteur 6, présent sur le conducteur 15, est représenté en trait plein à la figure 2. Il s'agit d'un signal rectangulaire 16 à une fréquence fr (période Tr), chaque impulsion-échantillon ayant une largeur $\delta$. La fréquence fr est choisie supérieure à 2 fb et de préférence égale à 5 ou 10 fb de façon à échantillonner correctement le signal émis par l'appareil FM-CW vis à vis du signal de battement obtenu après retour de l'onde émise dans l'appareil FM-CW non seulement en ce qui concerne sa fréquence fondamentale fb mais aussi les premiers harmoniques de fb. Par ailleurs, le rapport cyclique du signal sur le conducteur 15 est choisi assez faible, par exemple de l'ordre de 0,1 mais en tout état de cause suffisamment grand pour que l'intervalle de temps $\delta$ soit supérieur à la somme des temps de montée et de descente du signal dus au fonctionnement propre de l'interrupteur 6, cette somme étant de l'ordre de quelques nanosecondes à quelques dizaines de nanosecondes. A titre d'application numérique, on choisit par exemple les valeurs suivantes :

fb = 100 kHz ; fr = 991,66 kHz ; $\delta$ = 84 ns.

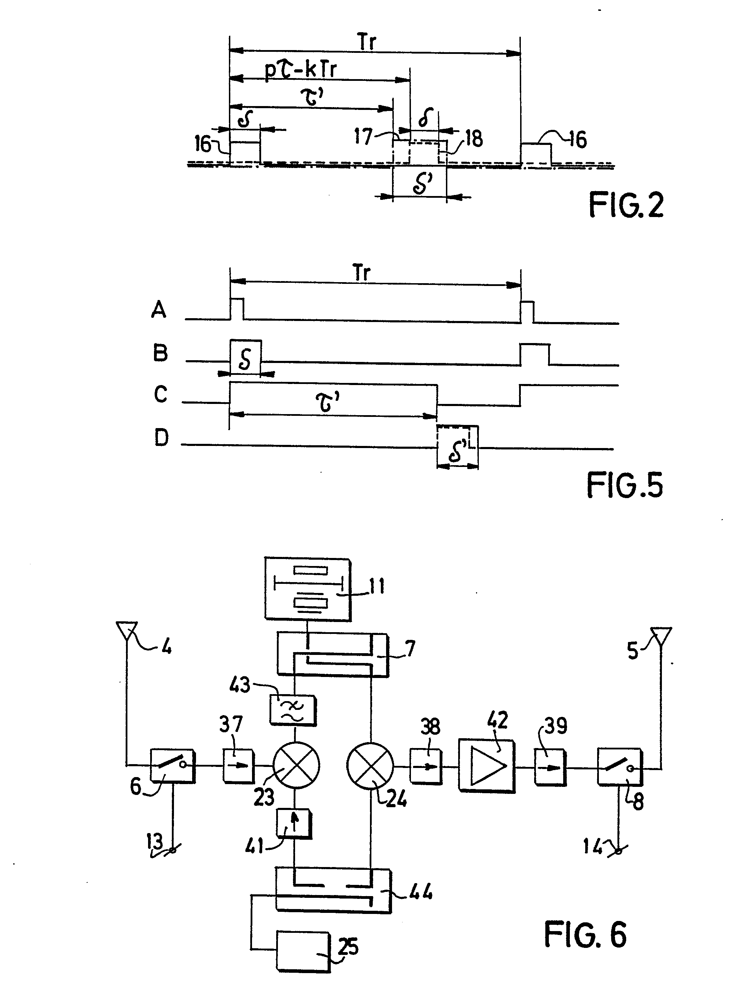

Après découpage, le signal d'émission est transmis au circulateur 7 puis, par l'intermédiaire du conducteur 12,à la ligne à retard 11. Il s'agit d'une ligne à retard à ondes de volume travaillant en réflexion et qui est, de préférence réalisée en corindon. Dans de telles lignes l'atténuation croît avec la fréquence, si bien que pour des fréquences de fonctionnement de plusieurs GHz seul le premier écho est identifiable en sortie, les échos d'ordre plus élevé étant quant à eux noyés dans le bruit. Par contre, à une fréquence de l'ordre de 1 GHz il est possible de réaliser des lignes à retard du type précité dont les dix à quinze premiers échos restent au-dessus d'un seuil d'affaiblissement supérieur au bruit, soit un taux d'affaiblissement compris entre 80 dB et 130 dB environ. Après réflexion simple ou multiple en 11 le signal haché revient en tant qu'écho,par l'intermédiaire du conducteur 12, vers le circulateur 7 qui le transmet au deuxième interrupteur 8 et est transmis à la partie réception 5 à la condition que l'interrupteur 8 soit ouvert à cet instant. La figure 2 représente ce fonctionnement en superposition par rapport au signal haché 16. On a représenté en trait mixte l'intervalle de temps 17 de durée $\delta$'pendant lequel l'interrupteur 8 est fermé, cet intervalle de temps englobant l'instant de durée $\delta$ pendant lequel apparaît l'écho 18 représenté en trait interrompu que l'on cherche à sélectionner. On notera que si $\tau$ est le temps d'aller-retour de l'onde dans la ligne à retard 11 et p le rang de l'écho 18 à sélectionner, l'écho 18 apparaît un temps p$\tau$ après avoir été émis. En plus des contraintes déjà énoncées ci-dessus pour Tr et $\delta$, on fait en sorte que l'écho 18 (respectivement les échos tels que 18) apparaisse(nt) entre deux impulsions 16. En·général le temps p$\tau$ est supérieur au temps Tr sans que ceci soit une obligation. Dans les deux cas, l'écho de rang p noté 18 sur la figure 2 apparaît avec un calage dans le temps invariable entre deux impulsions successives du signal 16 et la durée, inférieure à Tr qui sépare un écho 18 de l'impulsion du signal 16 juste antérieure peut être notée : p$\tau$ - kTr, k étant un nombre entier qui peut prendre la valeur 0 dans le cas particulier où c'est justement l'impulsion du signal 16 juste antérieure qui donne naissance à l'écho 18. Connaissant les valeurs précises de $\tau$ et de Tr et le rang p de l'écho que l'on souhaite sélectionner, il est possible de déterminer la durée p$\tau$ - kTr. Pour sélectionner l'écho de rang p il faut donc théoriquement imposer à l'interrupteur 8 une séquence de fonctionnement identique à celle de l'interrupteur 6 avec un retard égal à p$\tau$, modulo Tr, par rapport à ce dernier. En pratique, pour des raisons de précision difficiles à atteindre, on choisit un retard $\tau$' pour la commande du deuxième interrupteur par rapport au premier inférieur à p$\tau$ - kTr et un intervalle de temps de fermeture $\delta$' supérieur à $\delta$ comme représenté sur la figure 2, de façon telle qu'un petit intervalle de temps constituant une marge d'imprécision soit établi de part et d'autre de l'écho 18 en tant qu'avance à la fermeture et retard à l'ouverture . Comme on le verra ci-dessous en référence aux figures 3 et 5 la commande des interrupteurs 6 et 8 doit être effectuée avec la précision d'un quartz. En plus des contraintes indiquées ci-dessus pour les valeurs à respecter pour Tr et $\delta$, la sélection de l'écho de rang p représentatif de la distance simulée $d_p$conformément à la formule (2) est possible si les conditions suivantes sont vérifiées :

Tr - $\delta$ > p.$\tau$ - k.Tr > $\delta$ (7)

Pour la sélection d'un autre écho de rang q, des conditions analogues aux conditions (7) doivent être vérifiées, soit :

Tr' - $\delta_1$ > q.$\tau$ - k'.Tr' > $\delta_1$

Tr' respectant le principe d'échantillonnage précité. Il peut se faire que les valeurs Tr et $\delta$ conviennent aussi pour l'écho de rang q mais dans tous les cas, c'est-à-dire que les valeurs de Tr et de $\delta$ soient conservées ou non pour les différents échos identifiables dont le nombre et les rangs respectifs sont connus étant donné le type de ligne à retard utilisée et la fréquence de l'onde émise par l'appareil FM-CW, il faut s'assurer qu'il n'y a pas de superposition d'échos, ce qui pourrait se produire si, p et q étant les rangs respectifs de deux échos identifiables différents, on choisissait une valeur Tr telle que :

p$\tau$ - k.Tr ~ q.$\tau$ - k'.Tr, soit : (p - q)$\tau$ ~ (k - k')Tr

En conséquence le mode de réalisation de l'invention décrit ci-dessus s'applique à un nombre n d'échos identifiables faible, c'est-à-dire de préférence inférieur à 10.

Dans le but de rendre moins empirique la sélection des échos explicitée ci-dessus on décrit un deuxième mode de réalisation de l'invention en référence à la figure 3. On remarquera que pour éviter la superposition des échos entre eux ou la superposition d'un écho avec l'impulsion émise, il suffit de respecter par exemple les relations suivantes :

$\tau$ - k.Tr = $\delta$ (8)

Tr = (n + 1)$\delta$ (9)

n étant le rang de l'écho identifiable le plus élevé et représentant aussi, de préférence, le nombre d'échos identifiables, ce dernier cas signifiant que tous les échos, de 1 jusqu'à n, sont identifiables.

En combinant les relations (8) et (9), on obtient :

$$\frac{1}{Tr} = fr = \frac{k + \dfrac{1}{n+1}}{\tau} \qquad (10)$$

Une plage de valeurs convenables ayant été déterminée pour fr et connaissant par ailleurs les valeurs de $\tau$ et de n il est possible de déterminer, en vertu de la relation (10), plusieurs valeurs possibles pour k, notées $k_1$, $k_2$, $k_3$,..., correspondant à autant de valeurs $fr_1(Tr_1)$, $fr_2(Tr_2)$, $fr_3(Tr_3)$,... Les valeurs correspondantes possibles

de $\delta$ s'obtiennent à leur tour en utilisant la formule (9). On notera que le choix d'une seule valeur pour k, notée kj, ce qui détermine les valeurs frj, Trj, $\delta$j, suffit pour la mise en oeuvre de l'invention. En éliminant Tr entre les relations (8) et (9), $\delta$j peut être mis sous la forme :

$$\delta j = \frac{\tau}{(n+1)kj + 1} \qquad (11)$$

En pratique, dans le but de séparer entre eux de façon régulière les échos dans le temps, on choisit une valeur $\delta$ légèrement inférieure à $\delta j$ et, pour $\delta'$, une valeur comprise entre $\delta$ et $\delta j$, comme représenté à la figure 3 où l'on suppose que six échos de rangs respectifs $1^\circ$, $2^\circ$, $3^\circ$, $4^\circ$, $5^\circ$, $6^\circ$, sont identifiables. Pour obtenir l'écho de rang i (i pouvant prendre les valeurs 1, 2, ... n) il suffit donc de donner à $\tau'$ la valeur : $i.\delta j$, soit encore : $\tau' =$

$$\frac{\tau . i}{(n+1)kj + 1}$$

puisque les échos apparaissent en succession et disjoints, entre deux impulsions du signal 16, selon un ordre chronologique qui est le même que l'ordre croissant de leur rang.

En variante on peut aussi se donner les conditions suivantes :

$$\frac{1}{Tr} = fr = \frac{k - \dfrac{1}{n+1}}{\tau} \qquad (12)$$

$$Tr = (n + 1)\delta \qquad (9)$$

Dans ce cas les n échos identifiables sont obtenus selon la même configuration que celle représentée à la figure 3 à la seule différence près que leur ordre est inversé, par rapport à ce qui est indiqué à la figure 3, c'est-à-dire antichronologique. Pour obtenir l'écho de rang i, il suffit alors de donner à $\tau'$ la valeur $(n - i + 1)\delta j$. On notera que, par rapport au cas précédent, ceci revient à prendre des valeurs de Tr et par suite de $\delta$ légèrement supérieures.

A titre d'application numérique on choisit par exemple :
fb = 100 kHz ; $\tau$ = 10 µs ; n = 12
La plage de valeurs choisie pour fr est par exemple :
480 kHz < fr < 1,22 MHz
Les valeurs possibles pour k sont, en vertu de la relation (10) ou de la relation (12) :
$k_1$ = 5 ; $k_2$ = 6 ; $k_3$ = 7 ; $k_4$ = 8 ;
k = 9 ; $k_6$ = 10 ; $k_7$ = 11 ; $k_8$ = 12.
Parmi ces valeurs on choisit par exemple la valeur $k_6$ = 10 qui offre un bon compromis entre une fréquence d'échantillonnage assez élevée et une valeur de $\delta$ pas trop faible, ce qui conduit aux couples de valeurs $fr_6$, $\delta_6$ suivants :

pour des échos obtenus selon l'ordre chronologique :
$fr_6$ = 1,0077 MHz
$\delta_6$ = 76,3 ns
pour des échos obtenus selon l'ordre antichronologique :

$fr_6$ = 992,3 kHz
$\delta_6$ = 77,5 ns
Le système est très sensible aux variations de fréquence. Les fréquences $fr_6$ calculées ci-dessus doivent être obtenues, par exemple à partir d'un synthétiseur de fréquences avec la précision d'un quartz, de l'ordre de $10^{-4}$ à $10^{-5}$. Par contre, les valeurs de $\delta$ et $\delta'$ sont moins critiques et en correspondance avec les deux valeurs calculées ci-dessus pour $\delta_6$ on peut choisir par exemple les valeurs :
$\delta$ = 70 ns ; $\delta'$ = 73 ns
D'autres solutions sous la forme de conditions imposées à fr et $\delta$ sont possibles, qui conduisent au schéma de la figure 3 où les échos sont disjoints entre eux et aussi par rapport aux impulsions 16, et pour lesquelles un codage devient nécessaire pour établir la correspondance correcte entre d'une part la valeur donnée à $\tau'$ qui est égale à un nombre entier de fois $\delta j$ et d'autre part le rang de l'écho que l'on désire sélectionner. Ces autres solutions consistent à résoudre des équations du type :
$\tau = kj.Tr \pm u\delta$ (13)
u étant un nombre entier inférieur à n.
En fonction de la valeur donnée à n il peut se faire que certaines valeurs de u ne conviennent pas dans l'équation (13) pour l'obtention du résultat recherché, c'est-à-dire des échos et des impulsions disjoints, mais par exemple l'équation (13) est applicable lorsque n est divisible par u soit, dans le cas particulier de : n = 12, les valeurs : 2, 3, 4, 6.
Ces solutions sont moins avantageuses que celles précédemment décrites étant donné le codage supplémentaire qu'elles nécessitent mais elles présentent l'avantage de pouvoir ajuster la valeur de fr près d'une valeur de fréquence prédéterminée souhaitée. En fonction de l'équation (13) qui les généralise, les formules (10) et (12) se transforment en :

$$f_r = \frac{1}{T_r} = \frac{kj \pm \dfrac{u}{n+1}}{\tau} \qquad (14)$$

et la formule (11) en :

$$\delta j = \frac{\tau}{(n+1)kj \pm u} \qquad (15)$$

formules dans lesquelles n est divisible par u.

Pour reprendre l'application numérique indiquée ci-dessus, des fréquences $f_{r_*}$ possibles sont, outre les deux déjà calculées pour u = ± 1 :

953,84 kHz ; 969,23 kHz ; 976,92 kHz ;984,61 kHz 1015,38 kHz ; 1023,07 kHz ; 1030,77 kHz ; 1046,15 kHz.

Chaque valeur possible kj engendre donc au moins dix fréquences frj convenables dans le cas de n = 12, ce qui donne une fréquence fr précise possible tous les 10 kHz, en moyenne dans la plage de fréquences permise, par exemple entre 480 kHz et 1220 kHz.

On a décrit jusqu'ici des simulateurs selon l'invention destinés à fonctionner à des fréquences relativement faibles, de l'ordre de 1 GHz et pouvant sélectionner un nombre d'échos qui peut dépasser 10, ou bien à des fréquences plus élevées, de l'ordre de plusieurs GHz mais aptes à sélectionner dans ce dernier cas un nombre limité d'échos seulement, ce nombre limité pouvant être considéré comme faible pour le test de mesure de distance de l'appareil FM-CW. Or les appareils à tester fonctionnent généralement à une fréquence de plusieurs GHz avec une excursion de fréquence de l'ordre de quelques centaines de MHz. A titre d'exemple on considère dans la suite du texte un appareil FM-CW dont la fréquence fe est comprise entre 4,2 GHz et 4,4 GHz. De façon compatible avec les modes de réalisation décrits ci-dessus il est possible d'effectuer un passage en fréquence intermédiaire pour le circulateur et la ligne à retard et de rendre ainsi indépendantes et compatibles les fréquences de fonctionnement optimales de l'appareil FM-CW et les fréquences de fonctionnement optimales de la ligne à retard, comme décrit ci-dessous en référence à la figure 4.

Sur la figure 4 les mêmes éléments qu'à la figure 1 avec les mêmes fonctions portent les mêmes références. Certains détails de l'appareil FM-CW 1, d'un type connu, sont représentés. L'appareil 1 comporte les moyens d'émission et de réception 2 et 3 respectivement, antennes ou prises coaxiales, qui sont destinés à coopérer avec les moyens d'émission et de réception de même nature 4 et 5 respectivement du simulateur. Dans l'appareil, un battement soustractif est effectué dans un mélangeur 20, par exemple un mélangeur à diodes, entre une fraction de l'onde émise prélevée sur la voie d'émission par un coupleur 21 et l'onde reçue. De façon connue, de préférence, une régulation interne maintient constante la fréquence fb du signal de battement obtenu à la sortie 22 du mélangeur 20. A ce sujet on notera que le signal reçu sur l'entrée soustractive du mélangeur 20 en provenance des moyens de réception 3 est un signal haché de même nature que le signal 16 sur le conducteur 15 du simulateur (même fréquence et même rapport cyclique de hachage). Il s'ensuit que le signal à la sortie 22 du mélangeur 20 est lui-même un signal haché à la même fréquence et avec le même rapport cyclique que les deux signaux précités. A partir de ce dernier signal, un signal continu à la fréquence fb est reconstitué par filtrage de façon connue non représentée au sein de l'appareil FM-CW, de préférence au moyen d'un amplificateur passe-bande.

Le passage en fréquence intermédiaire est effectué, dans le simulateur de la figure 4 par deux mélangeurs 23 et 24 disposés entre les interrupteurs 6 et 8 d'une part et le circulateur 7, les entrées sur les mélangeurs étant additives dans cette chaîne, et par un oscillateur 25, de préférence un oscillateur à quartz. Le signal de sortie Fos de l'oscillateur 25 a une fréquence fos égale à la différence fe - fi entre la fréquence porteuse du signal émis par l'appareil FM-CW et la fréquence nominale fi du signal qui circule dans la ligne à retard 11. Par exemple, la fréquence fe varie linéairement entre 4,2 et 4,4 GHz et la fréquence fi entre 1,2 et 1,4 GHz. Dans ces conditions, fos est égale à 3 GHz. On peut ainsi, par un double changement de fréquence retarder l'onde émise autour de 4,3 GHz.

Sur la figure 4 on a aussi représenté à titre d'exemple des moyens de commande reliés aux bornes des entrées de commande 13 et 14 des interrupteurs 6 et 8. Ces moyens comportent un circuit à deux monostables 26 qui reçoit par un conducteur 27 le signal de sortie A d'un générateur de fréquence 28 et le signal de sortie d'un variateur de l'intervalle de temps $\tau'$, 29. Dans le circuit 26 un premier monostable déclenché sur front montant reçoit le signal A à la fréquence fr sur le conducteur 27. La sortie du premier monostable fournit un signal B formé d'impulsions à la fréquence fr et de durée $\delta$ réglée à l'intérieur du monostable par un circuit RC, à la fois à la borne de commande 13 du premier interrupteur 6 et, par un conducteur 31, à l'entrée d'un deuxième monostable déclenché sur front montant. La sortie du deuxième monostable fournit, par un conducteur 32, un signal C formé d'impulsions à la fréquence fr et de durée $\tau'$ à un troisième monostable 33 déclenché sur front descendant qui fait aussi partie des moyens de commande. Le monostable 33 est réglé pour une durée d'impulsion $\delta'$ par un circuit RC, ce qui résulte en un signal D formé d'impulsions à la fréquence fr et de durée $\delta'$ fourni par un conducteur 34 à la borne de commande 14. L'allure des signaux A, B, C et D en fonction du temps sur les conducteurs respectifs 27, 31, 32, 34 est représentée à la figure 5 où l'on a aussi représenté en trait interrompu la durée d'un écho identifiable comprise à l'intérieur de la séquence de fermeture de l'interrupteur 8. Le temps $\tau'$ est lui aussi réglé de façon connue au moyen d'un circuit RC. Pour obtenir la valeur de $\tau'$ égale à :

$$\frac{\tau \cdot i}{(n+1)kj \pm u}$$

on peut par exemple faire varier la valeur de la résistance appartenant à ce dernier circuit RC en fonction de la valeur 1, 2,... ou n choisie pour i en utilisant un commutateur à résistances à plots, dans le variateur 29, comportant i résistances notées $R_1$, $R_2$, ... $R_n$, chacune de ces résistances permettant d'obtenir, lorsqu'elle est branchée dans le circuit RC, l'une des valeurs précitées de $\tau'$. Un autre moyen pour engendrer la durée $\tau'$ consiste à utiliser un compteur, ce qui est rendu possible par le fait que toutes les valeurs de $\tau'$ sont multiples de la valeur élémentaire :

$$\frac{\tau}{(n+1)kj \pm u}$$

La valeur de fr doit être obtenue avec la précision d'un quartz et le générateur de fréquence 28 est, de préférence un synthétiseur de fréquence. Sur la figure 4 est aussi représenté un filtre 35 entre l'interrupteur 8 et les moyens de réception 5 du simulateur. Ce filtre, non indispensable, est un filtre passe-bande qui a pour fonction d'éliminer une partie du bruit dans le signal d'écho haché. La bande passante du filtre 35 est la même que l'excursion de fréquence du signal Fe soit, si l'on reprend l'exemple numérique indiqué ci-dessus, 4,2 GHz à 4,4 GHz.

En utilisant un simulateur conforme au schéma de la figure 4 avec une ligne à retard du type F 5026 fabriquée par la société Thomson procurant un retard $\tau$ de 9,96 µs à 4,3 GHz, et en appliquant la condition (12) avec n = 12 et k = 10 et la formule (2), on a pu obtenir en laboratoire pour une fréquence de découpage fr égale à 996,29 kHz, la simulation des distances suivantes :

4900 pieds, soit 1493 m avec une atténuation de 86 dB due au simulateur ;

14700 pieds, soit 4480 m avec une atténuation de 115 dB ;

19600 pieds, soit 5974 m avec une atténuation de 106 dB ;

34300 pieds, soit 10454 m avec une atténuation de 122 dB ;

39200 pieds, soit 11948 m avec une atténuation de 115 dB ;

53900 pieds, soit 16428 m avec une atténuation de 126 dB ;

ce qui correspond aux échos de rang 1, 3, 4 7, 8 et 11, respectivement, les échos de rang 2, 5, 6, 9 et 10 étant trop atténués pour être identifiables (en dessous de 140 dB d'atténuation).

Sur la figure 6 sont représentés avec les mêmes références les principaux composants de la partie hyperfréquence du simulateur de la figure 4. Certains de ces composants sont par exemple les suivants :

6 et 8 : commutateurs SPDT PIN de la société General Microwawe, référence MODEL F8924

23 et 24 : mélangeurs de la société ANAREN, référence 43126

7 : circulateur réalisé au moyen d'un coupleur 3 dB, fréquence 1,3 GHz ± 100 MHz de la société NARDA, référence 40326

11 : ligne à retard, $\tau$ = 80 µs, de la société THOMSON, référence F5026

25 : oscillateur 3 GHz/250 mW, de la société TRT.

Outre ces composants figurent quatre isolateurs 37, 38, 39, 41, un amplificateur 42, un filtre passe bas 43 et un coupleur 44. L'isolateur 37 est disposé entre l'interrupteur 6 et le mélangeur 23, l'isolateur 38 dans la chaîne principale juste en aval du mélangeur 24, l'isolateur 39 dans la chaîne principale juste en amont de l'interrupteur 8, et l'isolateur 41 juste en amont de la deuxième entrée du mélangeur 23. Les isolateurs 37 à 41 sont par exemple des isolateurs 4,2 GHz à 4,4 GHz de la société TRT, référence 3511 180 22 761. L'amplificateur 42, disposé entre les isolateurs 38 et 39, est par exemple un amplificateur de 40 dB de la société AERCOM, référence AT 4229. Le filtre passe-bas 43 disposé juste en aval du mélangeur 23 est par exemple un filtre à fréquence de coupure de 1,5 GHz fabriqué par la société TRT. Le signal Fos à fréquence fi de 3 GHz fourni par l'oscillateur 25 est distribué de façon soustractive et de façon additive respectivement aux mélangeurs 23 et 24, par l'intermédiaire du coupleur 44 qui est par exemple un coupleur 4 dB/3 GHz de la société ANAREN, référence 40266.

On notera que les lignes à retard de la société THOMSON utilisées pour les prototypes du simulateur indiquées ci-dessus ne sont pas particulièrement adaptées pour l'application visée par l'invention. Il est possible d'obtenir des lignes à retard pour lesquelles tous les échos de rangs successifs sont identifiables, avec une atténuation inférieure à 100 dB jusqu'à une valeur de n qui peut dépasser 12. Dans ce dernier cas, l'amplificateur 42 peut être supprimé, le niveau du signal obtenu à la sortie 5 du simulateur étant comparable à celui du signal d'écho obtenu lors d'une mesure de distance réelle.

**Revendications**

1. Simulateur de retard pour appareil de mesure de distance, notamment d'altitude ou radar, à onde continue modulée linéairement en fréquence, ledit appareil effectuant, en fonctionnement réel, une comparaison de fréquence entre l'onde émise et l'onde reçue après réflexion sur une cible ou réémission par un répondeur de façon à engendrer un signal de battement Fb à fréquence fb, ledit simulateur étant destiné à être connecté audit appareil pour tester son fonctionnement, caractérisé en ce qu'il comporte entre une partie émission et une partie réception d'une part une chaîne de traitement de signal constituée au moins par un premier interrupteur pour hyperfréquences un circulateur et un deuxième interrupteur pour hyperfréquences, d'autre part une ligne à retard travaillant en réflexion caractérisée par un temps d'aller-retour de l'onde à une fréquence donnée égal à $\tau$ et reliée par une entrée-sortie à une entrée-sortie du circulateur, et en troisième lieu des moyens de commande desdits interrupteurs tels que ces derniers soient fermés à une fréquence fr au moins égale à 2fb, le premier pendant un intervalle de temps $\delta$ nettement inférieur à 1/fr, le deuxième pendant un intervalle de temps $\delta'$ du même ordre que $\delta$, le déphasage de fonctionnement prédéterminé entre les deux interrupteurs pour hyperfréquences qui correspond à un intervalle de temps $\tau'$ réglable entre le début des intervalles de temps $\delta$ et $\delta'$ étant tel que les intervalles de temps $\delta$ et $\delta'$ soient disjoints et qu'au moins un écho d'ordre p de la ligne à retard satisfasse l'équation : $p.\tau = \frac{k}{fr} + \tau'$, k étant un nombre entier petit.

2. Simulateur de retard pour appareil de mesure de distance fonctionnant à une fréquence fe de plusieurs GHz selon la revendication 1 caractérisé en ce que ladite ligne à retard fonctionne à la fréquence intermédiaire fi de l'ordre de 1 GHz et qu'à cet effet un premier et un deuxième mélangeur pour hyperfréquences sont insérés dans ladite chaîne de traitement de signal entre le premier interrupteur et le circulateur et entre le circulateur et le deuxième interrupteur respectivement, le premier mélangeur recevant soustractivement un signal Fos en provenance d'un oscillateur à une fréquence fos telle que : fe - fos = fi et le deuxième mélangeur recevant additivement le signal Fos en provenance dudit oscillateur, de façon à restituer à sa sortie un signal de fréquence fi + fos = fe.

3. Simulateur de retard pour appareil de mesure de distance selon la revendication 1 ou 2 caractérisé en ce que des moyens d'amplification sont prévus juste en amont dudit deuxième interrupteur.

4. Simulateur de retard pour appareil de mesure de distance permettant la simulation de plusieurs retards selon l'une des revendications 1 à 3 caractérisé en ce que pour des fréquences de fonctionnement de ladite ligne à retard de l'ordre de 1 GHz, cette dernière émet un nombre d'échos identifiables au plus égal à n, ce qui permet de simuler au plus n retards différents séparés par $\tau$ ou un multiple de $\tau$, et que les relations suivantes sont vérifiées :

$$fr = \frac{k \pm \dfrac{u}{n+1}}{\tau}$$

$$\delta < \frac{\tau}{k(n+1) \pm u}$$

$$\tau' = \frac{\tau . i}{k(n+1) + u}$$

relations dans lesquelles :

k est un nombre entier tel que : $\frac{k}{\tau} > 2$ fb

u est un nombre entier qui divise n

i est un nombre entier qui peut prendre les valeurs 1, 2, 3,... n pour un couple de valeurs k et u donné.

FIG.1

FIG.3

FIG.4

FIG.2

FIG.5

FIG. 6

# RAPPORT DE RECHERCHE EUROPEENNE

Office européen des brevets

Numéro de la demande

EP   85 20 1797

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 813 917 (SIEMENS)<br>* Figure 1; page 4, lignes 14-18; page 7, ligne 20 - page 8, ligne 36 *<br><br>--- | 1,3 | G 01 S   7/40 |
| A | GB-A-2 083 966 (ELLIOTT BROTHERS)<br>* Figure 2; page 1, ligne 91 - page 2, ligne 56 *<br><br>--- | 1,2 | |
| A | GB-A-2 035 744 (THE MARCONI)<br>* Figures 1 et 2; page 1, ligne 79 - page 2, ligne 85 *<br><br>--- | 1,4 | |
| A | US-A-3 588 899 (R. STRAUCH)<br>* Figure 1; colonne 2, ligne 38 - colonne 6, ligne 33 *<br><br>--- | 1 | |
| A | FR-A-2 392 396 (ROCKWELL)<br>* Figure 1; page 4, ligne 23 - page 6, ligne 32 *<br><br>----- | 1 | DOMAINES TECHNIQUES RECHERCHES (Int. Cl.4)<br><br>G 01 S |

Le présent rapport de recherche a été établi pour toutes les revendications

| Lieu de la recherche<br>LA HAYE | Date d'achèvement de la recherche<br>10-02-1986 | Examinateur<br>CANNARD J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82